# EUROPÄISCHE PATENTSCHRIFT

(11) **EP 0 370 358 B1**
(45) Veröffentlichungstag und Bekanntmachung des Hinweises auf die Patenterteilung: **06.04.1994**
(21) Anmeldenummer: 89121028.8
(22) Anmeldetag: 13.11.1989
(51) Int. Cl.: C09K 3/18

(54) **Verfahren zum Verhindern der Eisbildung und zum Auftauen vorhandenen Eises auf Verkehrsflächen sowie Vorrichtung zur Durchführung des Verfahrens**
Process for anti-icing and de-icing traffic areas, and device for carrying out this process
Procédé pour empêcher la formation de glace ou déglacer les surfaces de roulement et dispositif de mise en oeuvre de ce procédé

(30) Priorität: 12.11.1988 DE 3838445
(43) Veröffentlichungstag der Anmeldung: 30.05.1990
(73) Patentinhaber: ING. ALFRED SCHMIDT GMBH, D-79830 St Blasien (DE)
(72) Erfinder: Prieur-Blanc, Serge, F-38140 Rives-sur-Fures (FR); Chopin, Francois, F-06000 Nice (FR); Hueber, Claude, F-38430 Saint Jean-de-Moirans (FR)
(74) Vertreter: Grättinger, Günter

(56) Entgegenhaltungen:
- DE-A- 1 658 418
- DE-B- 1 229 783
- FR-A- 2 059 301
- FR-A- 2 130 772
- FR-A- 2 258 491

## Beschreibung

Die Erfindung betrifft ein Verfahren zum Verhindern der Eisbildung auf Verkehrsflächen, z.B. Straßen oder Rollbahnen, bzw. zum Auftauen von darauf vorhandenem Eis, wobei eine wässrige Streusalzlösung aufbereitet und auf die Verkehrsfläche aufgebracht wird, sowie eine Vorrichtung zur Durchführung des erfindungsgemäßen Verfahrens.

Aus Gründen der Verkehrssicherheit ist es erforderlich, auch bei ungünstigen Witterungsverhältnissen die Bildung von Eis auf Verkehrsflächen zu verhindern, bzw. bereits vorhandenes Eis aufzutauen. Zu diesem Zweck hat sich das Aufbringen von Salz, insbesondere Steinsalz, auf die entsprechenden Verkehrsflächen durchgesetzt. Die Wirkung beruht darauf, daß durch einen Gehalt an Salz der Gefrierpunkt von Wasser herabgesetzt wird. Da eine Wirkung nur dann eintritt, wenn bereits Wasser vorhanden ist, in dem das aufgestreute Salz dissoziieren kann, tritt der gewünschte Effekt beim Streuen trockener Salzkristalle auf trockenes Eis nicht ein. Aus diesem Grunde hat es sich als vorteilhaft erwiesen, bei bestimmten Witterungs- und Straßenverhältnissen das Salz vor dem Ausbringen auf die Verkehrsflächen anzufeuchten. Durch das Anfeuchten des Salzes läßt sich darüberhinaus auch die Menge des auf die Verkehrsfläche aufzubringenen Salzes verringern, weil die Gefahr des Abtransportes des Salzes durch Wind und Verkehr verringert wird.

Aus der FR-A-2130772 geht ein Verfahren als bekannt hervor, bei welchem miteinander, bevorzugt gleichzeitig, eine Lösung und ein Feststoff ausgebracht werden. Angaben darüber, welche Konsistenz die ausgebrachte Mischung aus Lösung und Feststoff haben und insbesondere wie hoch der Salzgehalt der ausgebrachten Mischung sein soll, sind dieser Druckschrift nicht entnehmbar.

Das Aufbringen von körnigem Salz - trocken oder befeuchtet - hat jedoch den Nachteil, daß die auftauende Wirkung stets von den einzelnen Körnern ausgeht. Dadurch nimmt das Auftauen einer vereisten Verkehrsfläche entweder viel Zeit in Anspruch, oder es muß, damit sich eine hohe Körnerdichte auf der Verkehrsfläche ergibt, eine ökonomisch wie ökologisch nachteilig hohe Menge an Salz ausgebracht werden. Auch zur vorbeugenden Behandlung von Verkehrsflächen sind die bekannten Verfahren nicht optimal geeignet. Bei geringer Befeuchtung werden die ausgestreuten Körner leicht durch Wind und Fahrzeuge verfrachtet. Um eine optimale prophylaktische Behandlung zu erreichen, ist eine dünne Salzschicht wünschenswert, welche jedoch mit den üblichen Streuverfahren allenfalls unter Inkaufnahme eines hohen Salzverlusts realisierbar ist. Andererseits entsteht bei stärkerer Befeuchtung ein Salzbrei, der wegen der auftretenden Salzklumpen nicht mehr störungsfrei ausgebracht werden kann. Schließlich ist das Versprühen gesättigter Salzlösungen bekannt. Dieses Verfahren hat den wesentlichen Nachteil, daß die Lauge durch das Schmelzen von Eis ihre hohe Konzentration verliert und dadurch wieder gefrieren kann; um diesem Nachteil vorzubeugen müßte entsprechend dem Schmelzfortschritt trockenes Salz nachgestreut werden. Der maximale Schutz wird dabei bei einem Konzentrationsniveau entsprechend dem Laugeneutectikumpunkt erreicht.

Aufgabe der vorliegenden Erfindung ist es, ein Verfahren zu schaffen, bei dem das auf die Verkehrsfläche aufgebrachte Salz gleichmäßig auf der gesamten behandelten Fläche wirkt, bei dem ferner ein Verfrachten des auf der Verkehrsfläche befindlichen Salzes weitgehend verhindert und eine langfristig wirksame prophylaktische Behandlung der Verkehrsfläche ermöglicht wird (Depotwirkung) und bei dem zur Erzielung einer bestimmten Tauwirkung ein gegenüber den bekannten Verfahren verringerter Verbrauch an Salz besteht.

Diese Aufgabe wird erfindungsgemäß dadurch gelöst, daß die Streusalzlösung zum Zeitpunkt des Ausbringens einen Salzgehalt besitzt, der höher ist als der Sättigungsgehalt, bezogen auf die Außentemperatur. Durch das Aufbringen einer solchen Lösung auf die Verkehrsfläche wird erreicht, daß auf dieser unmittelbar ein Salzfilm entsteht. Die auftauende Wirkung setzt somit nicht an einzelnen Salzkörnern ein, sondern vielmehr gleichmäßig auf der gesamten Fläche. Bei der vorbeugenden Behandlung von Verkehrsflächen, d.h. wenn die Eisbildung zu erwarten ist, ist besonders vorteilhaft, daß die auf die Verkehrsfläche aufgebrachte Lösung sofort von den stets vorhandenen Unebenheiten in der Oberfläche aufgenommen wird und somit vor einer Verfrachtung geschützt ist. Der Sättigungsgrad, d.h. das Verhältnis von Salzgehalt zu Sättigungsgehalt, und die Menge der Lösung lassen sich dabei, unter Berücksichtigung der Außentemperatur, so steuern, daß das Salz unmittelbar nach dem Auftreffen auf die Verkehrsfläche aus der Lösung auskristallisiert und mit der Verkehrsfläche verkrustet. Ein besonderer Vorteil eines solchen Salzfilms bzw. einer derartigen Salzkruste liegt darin, daß das Festfahren von Schnee auf einer Straßenoberfläche wirksam verhindert wird, indem sich zwischen der Straßenoberfläche und dem Schnee stets ein dünner Salzlaugefilm befindet, der aufgrund der erzielten Depotwirkung des Salzes lange Zeit aufrechterhalten bleibt.

Wesentlich an der Aufbringung einer Lösung, deren Salzgehalt höher ist als der auf die Außentemparatur bezogene Sättigungsgehalt, ist, daß mit ausgebrachte nicht dissoziierte Kristalle quasi ein zusätzliches Salzdepot darstellen. Dadurch wird auch bei Verdünnung des aufgebrachten Films z.B. durch Niederschläge oder durch das Wasser aus dem bereits aufgetauten Eis die Konzentration der auf der Verkehrsfläche vorhandenen Flüssigkeit lange Zeit nahe der Sättigungsgrenze liegen. Auf diese Weise lassen sich die Zeitabstände zwischen zwei Streueinsätzen eines Straßendienstfahrzeuges deutlich verlängern.

Ein weiterer Vorteil des erfindungsgemäßen Verfahrens liegt darin, daß durch die Ausbringung einer Lösung eine genauere Dosierung der ausgebrachten Menge an wirksamer Substanz möglich ist als im Falle der Ausbringung von Körnern. Dies führt dazu, daß zur Erzielung des gleichen Effektes eine geringere Salzmenge ausgebracht werden muß als bei den bekannten Verfahren, was sowohl ökonomisch vorteilhaft wie ökologisch erwünscht ist.

Mit dem erfindungsgemäßen Verfahren ist es möglich, die natürliche Abhängigkeit der Löslichkeit des Salzes von der Temperatur der Salzlösung besonders vorteilhaft auszunutzen. So sieht eine vorteilhafte Ausführungsform des erfindungsgemäßen Verfahrens vor, daß die auf die Verkehrsflächen aufzubringende Salzlösung bei einer Temperatur hergestellt wird, bei der sie gesättigt oder ungesättigt ist, wohingegen die hergestellte Lösung, bezogen auf die Außentemperatur, eine übersättigte Lösung darstellt. Als wichtigster Vorteil dieser Ausführungsform des erfindungsgemäßen Verfahrens ist insbesondere die leichtere Handhabbarkeit der bei Verarbeitungstemperatur ungesättigten bzw. gesättigten Lösung gegenüber einer solchen Lösung zu nennen, deren Salzgehalt höher ist als der Sättigungsgehalt bei Verarbeitungstemperatur. Deren nicht dissoziierte Bestandteile erfordern spezielle Maßnahmen, um ein unerwünschtes Absetzen, Verstopfen von Leitungen oder Schäden an Fördereinrichtungen zu verhindern.

Durch das Aufbringen einer "warmen" Lösung auf die Verkehrsflächen wird zusätzlich die auftauende Reaktion beschleunigt und die Bildung eines Salzhydrats in den versprühten Tröpfchen vor deren Erreichen der Verkehrsfläche verhindert.

Der Salzgehalt in der erfindungsgemäß ausgebrachten Lösung ist bevorzugt der 1- bis 4-fache Wert des Sättigungsgehaltes. Im Hinblick auf eine im folgenden näher beschriebene Methode der Ausbringung hat sich als besonders vorteilhafter Bereich für den Salzgehalt der auf die Verkehrsflächen aufgebrachten Salzlösung der, bezogen auf die Außentemperatur, 1,05- bis 1,25-fache Wert des Sättigungsgehaltes des entsprechenden Salzes in einer wässrigen Lösung erwiesen. Bei Salzgehalten unterhalb des 1,05-fachen Wertes des Sättigungsgehaltes tritt ein wesentlicher Vorteil des erfindungsgemäßen Verfahrens, nämlich die Depotwirkung durch die nichtdissoziierten Kristalle nur in geringem Umfang auf; überschreitet der Salzgehalt in der Lösung dagegen den 1,25-fachen Sättigungsgehalt (bezogen auf die Außentemperatur), so wird die Handhabung der Lösung schwieriger. Verkrustungen an einzelnen Bauteilen ließen sich nur noch durch eine sehr hohe Verarbeitungstemperatur oder durch aufwendige technische Vorkehrungen verhindern. Ein Salzgehalt in der ausgebrachten Lösung vom 1,1- bis 1,2-fachen Sättigungsgehalt, bezogen auf die Außentemperatur, ist daher besonders vorteilhaft.

Zum Aufbringen der Salzlösung auf die entsprechenden Verkehrsflächen sind verschiedene Vorrichtungen geeignet. Prinzipiell kann man unterscheiden zwischen solchen Vorrichtungen, bei denen die Lösung, deren Salzgehalt größer ist als der auf die Außentemperatur bezogene Sättigungsgehalt, in einer großen Menge hergestellt und in einem entsprechenden Vorratsbehälter aufbewahrt wird, wobei durch Erhöhen der Temperatur der Lösung erreicht wird, daß das in der Lösung enthaltene Salz vollkommen gelöst ist, solange sich die Lösung in dem beheizten Vorratsbehälter befindet, und zwischen solchen Vorrichtungen, bei denen die Lösung erst unmittelbar vor deren Aufbringen auf die Verkehrsfläche hergestellt wird und zwar durch Zumischen von kristallinem Salz in eine, bezogen auf die Außentemperatur, gesättigte oder ungesättigte Salzlösung, und zwar in einem solchen Mengenverhältnis dieser Komponenten, daß eine Salzlösung mit dem gewünschten Salzgehalt entsteht.

Die erstgenannte Vorrichtung hat den Vorteil des einfacheren Aufbaus, weil nur ein Vorratsbehälter und nur eine Förderpumpe benötigt wird. Überdies kann das Aufbringen der Salzlösung auf die Verkehrsfläche mittels einfacher Bauteile, wie Düsen, erfolgen. Die Düsen können einzeln zu- und abschaltbar sein, wodurch eine Anpassung der Streubreite an die Straßenverhältnisse möglich ist. Es kann auch eine Förderpumpe mit regelbarer Fördermenge vorgesehen sein. Es ist aber zu bemerken, daß für einen großen Regelbereich eine genaue Dosierung erforderlich ist.

Um die Lösung in einem Vorratsbehälter auf einem Temperaturniveau zu halten, auf dem das gesamte enthaltene Salz gelöst ist, muß der Salzlösung Wärme zugeführt werden. Dafür bietet sich die bei einem Streufahrzeug stets vorhandene Abwärme des Motors und/oder der Motorabgase an. Durch eine entsprechende Wärmetauscheinrichtung, die entweder vom Kühlwasser des Motors oder vom Motorabgas durchströmt ist, läßt sich die Salzlösung in dem Vorratsbehälter ohne zusätzlichen Aufwand an Energie erwärmen.

Um die Förderung der Salzlösung zu den Düsen zu begünstigen, kann es vorteilhaft sein, die Salzlösung in dem Vorratsbehälter unter Überdruck zu setzen. Die Einstellung der Streumenge kann durch einen Regelhahn und einen Mengemesser erfolgen.

Um eine Wärmeabgabe an die Umgebung möglichst gering zu halten, ist eine vorteilhafte Ausführungsform des Vorratsbehälters mit einer wärmeisolierenden Umhüllung ausgerüstet.

Eine alternative Ausführungsform einer Vorrichtung zum Durchführen des erfindungsgemäßen Verfahrens weist zwei getrennte Vorratsbehälter auf, von denen der eine eine, bezogen auf die Außentemperatur, ungesättigte oder gesättigte Salzlösung und der andere trockenes, kristallines Salz enthält. Durch geeignete Fördereinrichtungen, wie z.B. eine Pumpe für die Lösung und eine Förderschnecke für das Salz werden die beiden Stoffe zu der Aufbringvorrichtung gefördert. Das Aufbringen erfolgt bei dieser Ausführungsform zweckmäßigerweise durch einen rotierenden Streuteller, wie er auch für die Trockensalzstreuung eingesetzt wird. Dabei können die beiden Stoffe in einer Mischeinrichtung miteinander vermischt werden, welche unmittelbar oberhalb oder neben dem Streuteller angeordnet ist. Anstelle eines Streutellers kann auch eine oszillierende Röhre vorgesehen sein.

Bei dieser Ausführungsform ist es besonders vorteilhaft, daß das Verhältnis von Salzgehalt zu Sättigungsgehalt der aufgebrachten Salzlösung je nach den Straßen- und Witterungsverhältnissen jederzeit innerhalb einer großen Bandbreite variiert werden kann, indem die Menge der von der Förderpumpe zugeführten Salzlösung und/oder die Menge des von der Förderschnecke zugeführten kristallinen Salzes verändert werden. Ein weiterer Vorteil dieser Ausführungsform besteht darin, daß der Vorratsbehälter für die ungesättigte bzw. gesättigte Salzlösung nicht nach jeder Benutzung des Straßendienstfahrzeuges entleert zu werden braucht, weil eine Auskristallisierung des in der Lösung enthaltenen Salzes durch Temperaturabsenkung nicht zu befürchten ist.

Eine Erwärmung der in dem Vorratsbehälter enthaltenen ungesättigen bzw. gesättigten Salzlösung durch eine mit der Abwärme des Fahrzeugsmotores und/oder des Motorabgases betriebene Wärmetauscheinrichtung ist auch bei dieser Ausführungsform möglich, wodurch sich der Vorteil des Ausbringens einer warmen Salzlösung auf die Verkehrsfläche mit dem Vorteil der jederzeitigen Anpaßbarkeit des Salzgehaltes der Salzlösung kombinieren läßt.

Das erfindungsgemäße Verfahren wird anhand der Zeichnung im folgenden näher erläutert, wobei
- Fig. 1: die Abhängigkeit der Löslichkeit verschiedener Salze von der Temperatur darstellt,
- Fig. 2: schematisch den Aufbau einer vorteilhaften Ausführungsform einer Vorrichtung zur Durchführung des erfindungsgemäßen Verfahrens zeigt und
- Fig. 3: den prinzipiellen Aufbau einer weiteren Ausführungsform einer Vorrichtung zur Durchführung des erfindungsgemäßen Verfahrens darstellt.

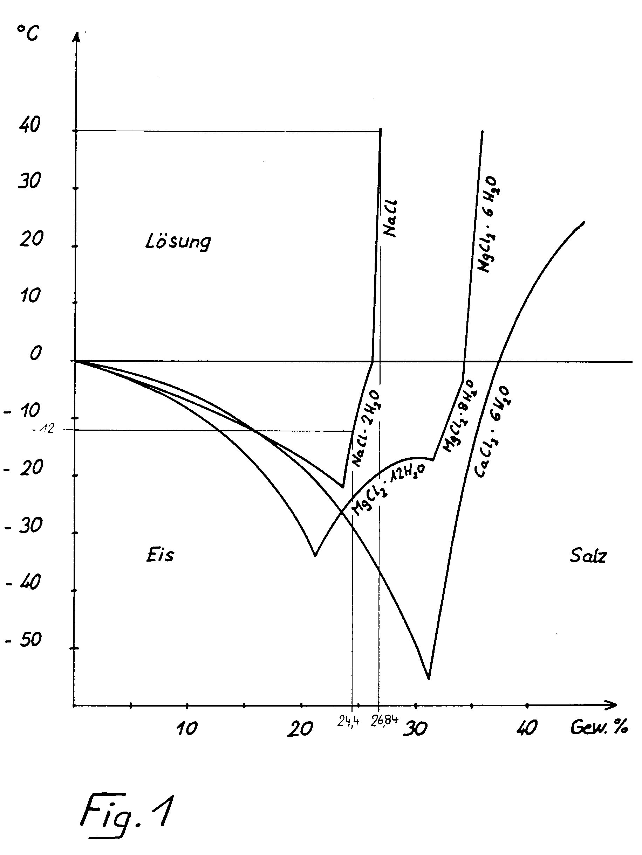

Mit Bezug auf Fig. 1 wird das folgende Beispiel betrachtet: Die Außentemperatur betrage -12°C. Fig. 1 gibt für diese Temperatur und für NaCl eine Sättigung bei 24,4 Gew.-%, d.h. 244 g Steinsalz zur Herstellung von 1 kg Lösung an. Soll eine Lösung mit 1,1fachem Sättigungsgrad hergestellt werden, so muß die Lösung 26,84 Gew.-% NaCl aufweisen. Fig. 1 gibt für diesen Salzgehalt eine Kristallisationstemperatur von 40°C an. Das heißt, daß bei Temperaturen oberhalb 40°C eine Lösung, die bei -12°C den 1,1-fachen Sättigungsgrad besitzt, ungesättigt ist. Um die bessere Verarbeitbarkeit einer ungesättigten Lösung gegenüber einer Lösung, deren Salzgehalt den Sättigungsgehalt übersteigt, auszunutzen, ist es daher vorteilhaft, in dem gegebenen Beispiel die Lösung auf eine Temperatur oberhalb 40°C zu erwärmen. Als geeigneter Wärmeträger kommt die Abwärme des Fahrzeugmotors und/oder der Abgase des Motors in Betracht. Bei Verwendung von CaCl₂ ließe sich der gleiche Effekt durch Anwärmen der Lösung auf nur etwa 12°C erzielen.

Fig. 1 zeigt darüberhinaus, daß bei der Abkühlung der Salzlösung mit 26,84 Gew.-% NaCl auf die Außentemperatur von -12°C auf der Straßenoberfläche ein Steinsalzhydrat entsteht, welches durch seine Neigung zur Verkrustung auf der Straßenoberfläche für die besonders geringe Tendenz zur Verfrachtung des aufgebrachten Salzes durch Verkehr oder Wind verantwortlich ist.

Eine Vorrichtung zur Durchführung des erfindungsgemäßen Verfahrens ist in Fig. 2 schematisch dargestellt. Ein Vorratsbehälter (1) enthält Salzlösung (2) in einer Konzentration, die der bezogen auf die Außentemperatur gewünschten Übersättigung entspricht. In die Salzlösung hinein ragt ein Wärmetauscher (3), der zur Erwärmung der Salzlösung (2) auf eine Temperatur dient, bei der das enthaltene Salz vollständig gelöst ist. Der Wärmetauscher (3) kann beispielsweise an den Kühlwasserkreislauf des Fahrzeugmotores angeschlossen oder aber vom Abgas des Motors durchströmt sein. Um die Temperaturverluste an die Umgebung gering zu halten, ist der Vorratsbehälter (1) vorzugsweise von einer Isolierung (4) umgeben. Eine Rohrleitung entnimmt dem Vorratsbehälter (1) an dessen Boden (6) die Salzlösung und führt sie einer Pumpe (7) zu, die die Salzlösung der aus mehreren Düsen (8) und einer dazugehörigen Verteileinrichtung (9) bestehenden Aufbringvorrichtung zuführt. Statt der Düsen können selbstverständlich auch andere bekannte Aufbringvorrichtungen vorgesehen sein.

Zusätzlich kann vorgesehen sein, daß der Innenraum des Vorratsbehälters (1) unter Überdruck gehalten wird. Um die Anlage unter Druck zu setzen, kann man den z.B. Pressluftüberschuß der Bremsanlage des Lastwagens verwenden, der über ein in den Vorratsbehälter (1) mündendes Rohr (10) zugeleitet wird. Zur Aufrechterhaltung eines konstanten Überdruckes in dem Vorratsbehälter eignet sich ein herkömmliches Druckhalteventil (11). Bei dieser Ausführungsform kann die Pumpe (7) entsprechend geringer dimensioniert werden, da die Salzlösung (2) bereits im Vorratsbehälter (1) einem Überdruck ausgesetzt ist, wodurch die Förderung durch die Leitung (5) zu den Düsen (8) gefördert wird.

Das Preßluft führende Rohr (10) kann auch perforiert ausgebildet sein, so daß die aus der Perforation austretenden Preßluftblasen für eine gute Durchmischung der Salzlösung (2) sorgen.

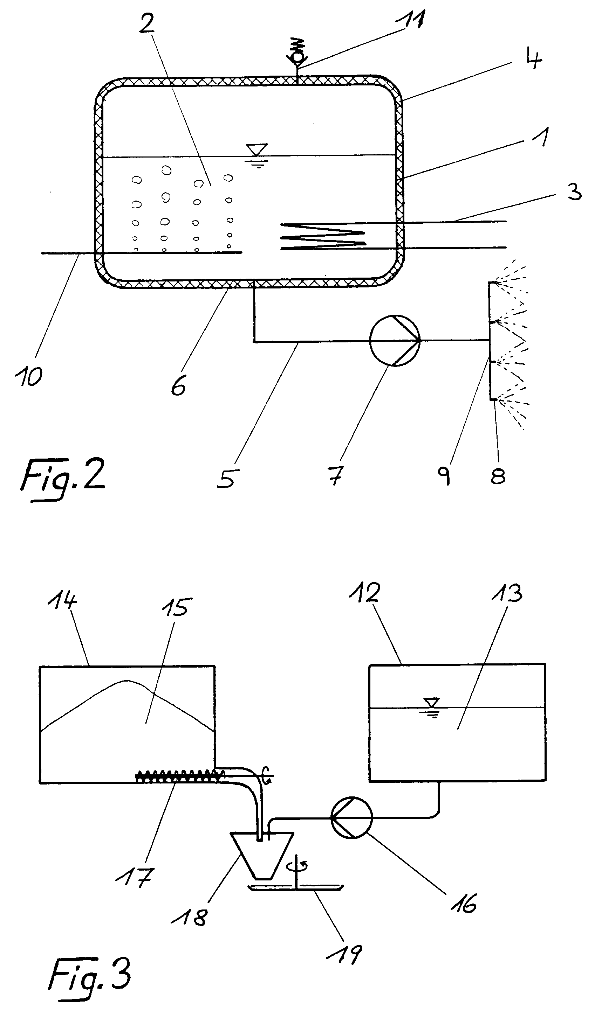

Fig. 3 zeigt eine weitere Ausführungsform einer Vorrichtung zur Durchführung des erfindungsgemäßen Verfahrens. Bei dieser Vorrichtung erfolgt das Herstellen der Lösung, deren Salzgehalt den auf die Außentemperatur bezogenen Sättigungsgehalt übersteigt, unmittelbar vor dem Aufbringen der so hergestellten Lösung auf die Verkehrsfläche.

Die Vorrichtung besitzt zu diesem Zweck zwei unabhängige Vorratsbehälter, nämlich einen Vorratsbehälter (12) für die bezogen auf die Außentemperatur ungesättigte oder gesättigte Salzlösung (13) sowie einen Vorratsbehälter (14) für das trockene Salz (15). Mit Hilfe von geeigneten Fördereinrichtungen wie z.B. einer Pumpe (16) für die Lösung (13) bzw. eines Förderbands oder einer Förderschnecke (17) für das trockene Salz (15) werden die beiden Substanzen zu einer Mischeinrichtung (18) gefördert. In der Mischeinrichtung (18) entsteht die Lösung in einer Zusammensetzung, die durch die gewählte Förderleistung der Fördereinrichtungen (16, 17) einstellbar ist. Die so hergestellte Lösung gelangt von der Mischeinrichtung (18) auf den rotierenden Teller (19), welcher die Salzlösung auf die Verkehrsfläche aufbringt.

Auch bei dieser Vorrichtung ist natürlich ein Beheizen der Salzlösung (13) durch Wärmetauscheinrichtungen gemäß Fig. 2 möglich, um die vorbeschriebenen Vorteile des Aufbringens einer warmen Lösung auszunutzen.

Als Ausführungsformen für die Mischeinrichtung (18) kommen insbesondere Mischrohre, Venturirohre, Zyklone, Trichter oder ähnliches in Betracht.

## Patentansprüche

1. Verfahren zum Verhindern der Eisbildung auf Verkehrsflächen z.B. Straßen oder Rollbahnen bzw. zum Auftauen von darauf vorhandenem Eis, wobei eine wässrige Streusalzlösung aufbereitet und auf die Verkehrsflächen aufgebracht wird,
dadurch gekennzeichnet,
daß die Streusalzlösung zum Zeitpunkt des Ausbringens einen Salzgehalt besitzt, der höher ist als der Sättigungsgehalt, bezogen auf die Außentemperatur.

2. Verfahren nach Anspruch 1,
dadurch gekennzeichnet,
daß als Streusalz NaCl und/oder CaCl₂ und/oder MgCl₂ verwendet werden.

3. Verfahren nach Anspruch 2,
dadurch gekennzeichnet,
daß der Salzgehalt der ausgebrachten Lösung kleiner ist als der 4-fache Wert des Sättigungsgehaltes, bezogen auf die Außentemperatur.

4. Verfahren nach Anspruch 3,
dadurch gekennzeichnet,
daß der Salzgehalt der ausgebrachten Lösung dem 1.05- bis 1,25-fachen Wert des Sättigungsgehaltes, bezogen auf die Außentemperatur, entspricht.

5. Verfahren nach einem der Ansprüche 1 bis 4,
dadurch gekennzeichnet,
daß das Herstellen und Aufbringen der Lösung bei einer oberhalb der Außentemperatur liegenden Temperatur erfolgt, bei der die Lösung ungesättigt oder gesättigt ist.

6. Verfahren nach Anspruch 5,
dadurch gekennzeichnet,
daß die in einem Vorratsbehälter befindliche auszubringende Lösung durch die Abwärme von Fahrzeugmotor und/oder Motorabgasen aufgeheizt wird.

7. Verfahren nach Anspruch 6,
dadurch gekennzeichnet,
daß der Vorratsbehälter unter Überdruck gehalten wird.

8. Verfahren nach Anspruch 6 oder Anspruch 7,
dadurch gekennzeichnet,
daß das Aufbringen der Lösung auf die Verkehrsfläche durch Düsen und/oder durch rotierende Teller erfolgt.

9. Verfahren nach Anspruch 1,
dadurch gekennzeichnet,
daß das Herstellen der auszubringenden Lösung dadurch erfolgt, daß unmittelbar vor dem Aufbringen auf die Verkehrsfläche trockenes Salz (15) zu einer ungesättigten oder gesättigten Lösung (13) dieses Salzes zugegeben wird.

10. Vorrichtung zur Durchführung des Verfahrens nach Anspruch 1 zum Aufbringen einer Salzlösung, deren Salzgehalt über dem Sättigungsgehalt, bezogen auf die Außentemperatur, liegt, auf Verkehrsflächen, bestehend aus einem Vorratsbehälter (1) für die Salzlösung (2) sowie Rohrleitungen (5), mindestens einer Pumpe (7) und mindestens einer Düse (8) zum Versprühen der Salzlösung, wobei der Vorratsbehälter (1) eine Wärmetauscheinrichtung (3) zum Erwärmen der Salzlösung (2) enthält.

11. Vorrichtung nach Anspruch 10,
dadurch gekennzeichnet,
daß die Wärmetauscheinrichtung mit Abwärme des Fahrzeugmotors und/oder des Motorabgases beaufschlagbar ist.

12. Vorrichtung nach Anspruch 10,
dadurch gekennzeichnet,
daß in dem Vorratsbehälter (1) ein offenes, Bremsluftüberschuß führendes Rohr (10) mündet und daß der Vorratsbehälter ferner ein Druckhalteventil (11) aufweist, so daß stets ein konstanter Überdruck in dem Vorratsbehälter aufrechterhalten wird.

13. Vorrichtung zur Durchführung des Verfahrens gemäß Anspruch 9, bestehend aus einem Vorratsbehälter (12) für eine gesättigte oder ungesättigte Salzlösung (13), einem Vorratsbehälter (14) für trockenes Salz (15), Fördereinrichtungen (16, 17) für die beiden Stoffe und einen als Verteilvorrichtung dienenden rotierbaren Streuteller (19),
dadurch gekennzeichnet,
daß oberhalb des Streutellers (19) eine Mischeinrichtung (18) vorgesehen ist, in die die Lösung (13) und das Salz (15) gefördert werden und in der diese Stoffe unmittelbar vor dem Auftreten auf den Streuteller miteinander vermischt werden.

## Claims

1. Method for preventing the formation of ice on traffic areas, for example roads or taxiways or for thawing ice present thereon, an aqueous spreading salt solution being prepared and applied to the traffic areas, characterized in that at the time that it is applied the spreading salt solution has a salt content which is higher than the saturation content, relative to the ambient temperature.

2. Method according to Claim 1, characterized in that Nacl and/or CaCl₂ and/or MgCl₂ are used as spreading salt.

3. Method according to Claim 2, characterized in that the salt content of the solution applied is less than the four-fold value of the satuation content, relative to the ambient temperature.

4. Method according to Claim 3, characterized in that the salt content of the solution applied corresopnds to the 1.05-1.25-fold value of the saturation content, relative to the ambient temperature.

5. Method according to one of Claims 1 to 4, characterized in that the production and application of the solution takes place at a temperature above the ambient temperature, at which the solution is unsaturated or saturated.

6. Method according to Claim 5, characterized in that the solution to be applied, located in a storage container, is heated by the waste heat from the vehicle engine and/or engine exhaust gases.

7. Method according to Claim 6, characterized in that the storage container is kept at excess pressure.

8. Method according to Claim 6 or Claim 7, characterized in that the application of the solution to the traffic area takes place by nozzles and/or by rotating plates.

9. Method according to Claim 1, characterized in that the production of the solution to be applied takes place due to the fact that directly before the application to the traffic area dry salt (15) is added to an unsaturated or saturated solution (13) of this salt.

10. Apparatus for carrying out the method according to Claim 1 for the application of a salt solution, whereof the salt content lies above the saturation content, relative to the ambient temperature, to traffic areas, consisting of a storage container (1) for the salt solution (2) and pipelines (5), at least one pump (7) and at least one nozzle (8) for spraying the salt solution, the storage container (1) containing a heat exchange device (3) for heating the salt solution (2).

11. Apparatus according to Claim 10, characterized in that the heat exchange device receives the waste heat from the vehicle engine and/or the engine exhaust gas.

12. Apparatus according to Claim 10, characterized in that opening out in the storage container (1) is an open pipe (10) carrying the compress-air excess and that the storage container furthermore comprises a pressure-maintaining valve (11), so that a constant excess pressure is always maintained in the storage container.

13. Apparatus for carrying out the method according to Claim 9, consisting of a storage container (12) for a saturated or unsaturated salt solution (13), a storage container (14) for dry salt (15), conveying devices (16, 17) for the two substances and a rotatable spreading plate (19) serving as a distribution device, characterized in that provided above the spreading plate (19) is a mixing device (18), into which the solution (13) and the salt (15) are conveyed and in which these substances are mixed with each other directly before reaching the spreading plate.

## Revendications

1. Procédé destiné à empêcher la formation de glace sur des surfaces de circulation, par exemple des routes ou des pistes de roulement, ou à faire fondre la glace qui s'y trouve, une solution aqueuse de sel de déneigement étant préparée et répandue sur la surface de circulation, caractérisé en ce que la solution de sel de déneigement présente, au moment de l'épandage, une teneur en sel supérieure à la teneur de saturation relative à la température extérieure.

2. Procédé selon la revendication 1, caractérisé en ce que l'on utilise en guise de sel de déneigement, du NaCl et/ou du CaCl₂ et/ou du MgCl₂.

3. Procédé selon la revendication 2, caractérisé en ce que la teneur en sel de la solution répandue est inférieure à quatre fois la valeur de, la teneur de saturation relative à la température extérieure.

4. Procédé selon la revendication 3, caractérisé en ce que la teneur en sel de la solution répandue correspond à 1.05 à 1.25 fois la valeur de la teneur de saturation relative à la température extérieure.

5. Procédé selon l'une des revendications 1 à 4, caractérisé en ce que la fabrication et l'épandage de la solution s'effectuent à une température située au-dessus de la température extérieure, et pour laquelle la solution est insaturée ou saturée.

6. Procédé selon la revendication 5, caractérisé en ce que la solution à répandre se trouvant dans un réservoir de stockage est chauffée par la chaleur perdue du moteur du véhicule et/ou des gaz d'échappement du moteur.

7. Procédé selon la revendication 6, caractérisé en ce que le réservoir de stockage est maintenu sous pression.

8. Procédé selon la revendication 6 ou la revendication 7, caractérisé en ce que l'épandage de la solution sur la surface de circulation, s'effectue par l'intermédiaire de buses et/ou de disques rotatifs.

9. Procédé selon la revendication 1, caractérisé en ce que la fabrication de la solution à répandre s'effectue en additionnant du sel sec (15), juste avant l'épandage sur la surface de circulation, à une solution insaturée ou saturée (13) de ce sel.

10. Dispositif pour la mise en oeuvre du procédé selon la revendication 1, consistant à répandre sur des surfaces de circulation, une solution de sel dont la teneur en sel est supérieure à la teneur de saturation relative à la température extérieure, le dispositif étant constitué d'un réservoir de stockage (1) pour la solution de sel (2), ainsi que de conduites (5), au moins une pompe (7) et au moins une buse (8) pour pulvériser la solution de sel, le réservoir de stockage (1) comportant une installation d'échange de chaleur (3) pour chauffer la solution de sel (2).

11. Dispositif selon la revendication 10, caractérisé en ce que l'installation d'échange de chaleur peut être alimentée par la chaleur perdue du moteur du véhicule et/ou des gaz d'échappement du moteur.

12. Dispositif selon la revendication 10, caractérisé en ce que dans le réservoir de stockage (1) débouche un tube ouvert (10) conduisant le surplus d'air de freinage, et en ce que le réservoir de stockage comporte, par ailleurs, une soupape de maintien en pression (11), de sorte que le réservoir est maintenu continuellement sous une pression intérieure constante.

13. Dispositif pour la mise en oeuvre du procédé selon la revendication 9, composé d'un réservoir de stockage (12) pour une solution de sel (13) saturée ou insaturée, un réservoir de stockage (14) pour du sel sec (15), des dispositifs de transports (16, 17) pour les deux substances, et un disque d'épandage (19) pouvant être mis en rotation et faisant office de dispositif de distribution, caractérisé en ce qu'au-dessus du disque d'épandage (19) est prévu un dispositif de mélange (18) dans lequel sont transportés la solution (13) et le sel (15), et dans laquelle ces substances sont mélangées l'une à l'autre, juste avant de parvenir sur le disque d'épandage.
